Europäisches Patentamt

European Patent Office

Office européen des brevets

(19)

(11) Publication number : **0 475 733 A2**

# (12) EUROPEAN PATENT APPLICATION

(21) Application number : **91308261.6**

(22) Date of filing : **10.09.91**

(51) Int. Cl.$^5$ : **B60C 9/02, B60C 5/14**

(30) Priority : **13.09.90 GB 9020018**

(43) Date of publication of application :
**18.03.92 Bulletin 92/12**

(84) Designated Contracting States :
**DE FR GB IT**

(71) Applicant : **SUMITOMO RUBBER INDUSTRIES LIMITED**
**1-1 Tsutsuicho 1-chome Chuo-ku**
**Kobe-shi Hyogo-ken (JP)**

(72) Inventor : **Powell, Brian David William**
**13 Ross Way, Chetwynd**
**Nuneaton, Warwickshire CV11 4TL (GB)**

(74) Representative : **Stewart, Charles Geoffrey**
**SP TYRES UK LIMITED Tyre Technical Division**
**Fort Dunlop Birmingham B24 9QT (GB)**

(54) Tubeless pneumatic tyres.

(57) A tubeless pneumatic tyre comprising a pair of bead regions (2) and a reinforcing carcass extending from bead region to bead region around the tyre to define the air retaining envelope, characterised in that the reinforcing carcass comprises at least one ply (1) of a reinforcing fabric comprising a matrix of reinforcing filaments or cords embedded in a topping layer of elastomeric material, wherein the elastomeric material has an air permeability factor of less than $4.0 \times 10^{-8} m^4/GNs$ and a peel adhesion value as defined herein to the reinforcing filaments or cords of greater than 15N.

FIG.1

EP 0 475 733 A2

This invention relates to pneumatic tyres, and in particular to tubeless pneumatic tyres for car, truck, motor cycle, earthmover, aircraft etc use.

Conventional pneumatic tyres comprise a casing or carcass having one or more reinforcing plies whose ends are turned up outwardly around a pair of beads. The reinforcing plies consist of textile or steel cords embedded in a rubber compound known as topping or skim coat. Such reinforcing plies may be arranged substantially at 90 degrees to the circumferential direction of the tyre, commonly known as radial construction, or successive layers of ply material may be arranged so the cords of successive layers cross at opposite angles in a so-called bias ply construction. In tyres of either construction there is disposed radially inwardly of the reinforcing ply an innerlining, the main purpose of which is to retain the air under pressure in the inside of the tyre.

The innerlining normally consists of a rumbber compound specially formulated to have low air permeability. Halobutyl rubbers such as chlorobutyl and bromobutyl rubber have been found to be particularly useful in innerlining compounds because of their very low permeability to air and moisture. Halobutyl rubbers however are expensive and are well known to not adhere well to tyre reinforcement materials. Such halobutyl rubbers are frequently compounded with other elastomers to reduce cost.

Tyres having halobutyl innerlinings also normally require an additional interlayer of another rubber between the reinforcing plies and the liner to prevent pull through of the reinforcing cords into the halobutyl rubber during manufacture.

Innerliners add weight to the tyre and add complerity to tyre building particularly as to avoid porosity problems on calendering it is often necessary to use two layers. The liner joint is also a potential defect in the tyre structure.

It is an object of the present invention to avoid the need to use a separate innerlining in a tubeless pneumatic tyre and thus avoid the above problems.

According to one aspect of the present invention a tubeless pneumatic tyre comprises a pair of beads and a reinforcing carcass containing at least one ply of a reinforcing fabric extending from bead to bead comprising a matrix of filaments or cords embedded in an elastomeric material topping compound wherein the elastomeric material has an air permeability factor of less than $4.0 \times 10^{-8} m^4/GNs$ and a peel adhesion value to the reinforcing filaments or cords of greater than 15N as defined herein.

Peel adhesion values of the elastomeric material to cord are measured by the following procedure. A slab of the unvulcanised elastomeric material measuring 228mm x 76mm x 4.5mm is taken and onto the surface in the longest direction are laid four cords held in a frame under slight tension to keep the cords straight. Where the cords are greater than 0.8mm in diameter then the cords are spaced apart by 4mm otherwise the spacing is 2mm. At one end of the test piece is placed a 50mm strip of polyester film between the cords and the elastomeric material to prevent adhesion. The slab of elastomeric material, with the cords on the surface, is then vulcanised for 25 minutes at 145°C under a pressure of 2 tonnes. After vulcanisation the sample is cooled and left for 30 minutes. Testing is carried out by peeling down individual cords at the rate of 50mm/minute using an Instron tensile test machine. The results for three cords are averaged and the results expressed in Newtons.

Air permeability is measured according to BS903 part A17 at a temperature of 30°G. Results are expressed in units of $m^4/GNs$.

More preferably the elastomeric material has an air permeability of less than $2.0 \times 10^{-8} m^4/GNs$.

Even more preferably the elastomeric material has an air permeability of less than $1.0 \times 10^{-8} m^4/GNs$.

The peel adhesion value to the reinforcing fabric cords is preferably greater than 25N.

Cords suitable for the tyre of the invention include organic cords such as cords of rayon, aromatic polyamide, nylon or polyester or metallic cords such as steel cords, which are normally brass plated.

The elastomeric material may comprise a nitrile rubber, a butyl rubber or a halobutyl rubber such as chlorobutyl or bromobutyl rubbers. More preferably the elastomeric material comprises an epoxidised natural rubber.

Where the elastomeric material comprises nitrile, butyl or halobutyl rubber it is preferable that it also comprises epoxidised natural rubber to contribute to providing the peel adhesion value.

In the reinforcing ply the elastomeric material, which is sometimes referred to as the topping material, may be the same thickness both sides of the cords or different thicknesses or on one side only of the cords. In the latter case another elastomeric material composition may be used on the other side.

Further aspects of the invention will be seen from the example elastomeric compositions as shown in Table 1. The Table also includes composition A which is a typical prior art topping compound for rayon cord as might be used in a conventional car tyre. This compound has adequate adhesion to the rayon cord but its relatively high air permeability is such that the tyre also requires a low permeability liner. Composition E is such a typical prior art low permeability innerliner compound, bases on a blend of chlorobutyl rubber with SBR and synthetic polyisoprene. However as can be seen this compound, when tested, has poor adhesion to rayon cord.

By contrast, compositions B, C and D are blends of styrene-butadiene and/or natural rubber with epoxidised natural rubber. It can be seen that with the increasing amounts of epoxidation in the compound according to the invention the peel adhesion level is retained and improved beyond that of the topping compound A whilst at the same time air permeability is much reduced, indeed to a level below that of the liner compound E. Compounds B, C and D are compositions of the present invention.

Composition F is included to show that the addition of resorcinol and HMT to the prior art liner compound E does not result in the required adhesion levels of compositions A, B, C or D. This is demonstrated again in compositions H and I where it can be seen that the absence of resorcinol and HMT actually results in increased adhesion to the rayon cord. Composition J shows that a proportion of bromobutyl rubber may be blended with styrene butadiene and epoxidised natural rubber to give another elastomeric compound example of the present invention.

Composition K shows that a composition based on bromobutyl rubber alone has inadequate adhesion to rayon cord.

Still further aspects of the invention will become apparent in the following descriptions of tyres in conjunction with the attached diagrammatic drawings in which:

Figure 1 is a radial cross-section of a tyre for a motor car according to the present invention;

Figure 2 is a part scrap sectional view of the sidewall of the tyre of Figure 1 showing detail of the reinforcing ply fabric.

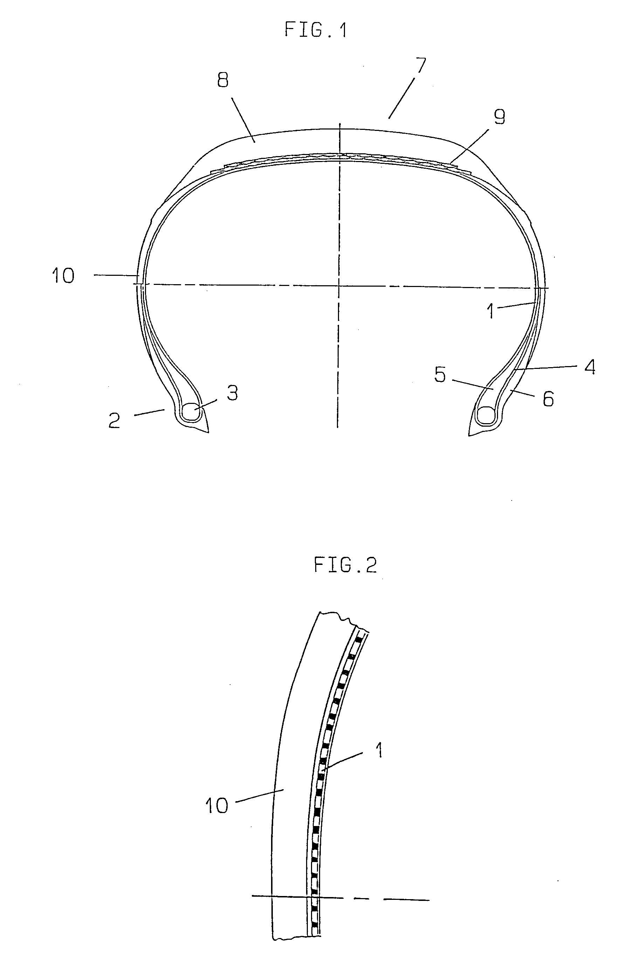

The tyre shown in Figure 1 is a 155R13 size radial car tyre and comprises a single reinforcing ply 1 extending between a pair of bead regions 2,2 which is outwardly turned at each edge around a bead hoop 3 to form a ply turn-up 4. In each bead region 2 a hard rubber apex 5 is disposed on the bead hoop and between the ply 1 and ply turn-up 4 to stiffen the bead region 2. On the radially outer side of each ply turn-up 4 the tyre has a clinch strip 6 to prevent chafing against the wheel rim. The ground contacting region 7 of the tyre has a rubber tread 8 which is reinforced by a breaker 9 disposed radially between the ply and the tread. Between the tread 8 and bead regions 2 of the tyre the ply 1 is protected by a rubber sidewall 10.

The reinforcing ply fabric 1 consists of parallel cords of dipped rayon cord of 2/184 TEX embedded in compound D from Table 1 comprising a 75/25 blend of in epoxidised natural rubber (having 50 mol % epoxidisation) and cis-polyisoprene. Compound D has an air permeability factor of less than $0.5 \times 10^{-8} m^4/GNs$ and a peel adhesion value to the rayon cord of 31N. The total thickness of the ply fabric was 1.3mm consisting of 0.18mm of topping over the cord on the radially innerside and 0.38mm of topping over the cord on the radially outer side.

As alternatives to compound D compounds B, C, H, I or J from Table 1 may be used.

EP 0 475 733 A2

TABLE 1

| | A | B | C | D | E | F | H | I | J | K |
|---|---|---|---|---|---|---|---|---|---|---|
| SMR 20 | 57.0 | | | | 20.0 | 20.0 | | | | |
| IR (96% cis) | 25.0 | 25.0 | 25.0 | 25.0 | | | | | | |
| SBR 1502 | 18.0 | 18.0 | 18.0 | | | | 40.0 | 40.0 | 25.0 | |
| SBR 1712 | | | | | 20.0 | 20.0 | | | | |
| Cl IIR | | | | | 60.0 | 60.0 | | | | |
| Br IIR | | | | | | | | | 25.0 | 100.0 |
| ENR-25 (4) | | 57.0 | | | | | | | | |
| ENR-50 (5) | | | 57.0 | 75.0 | | | 60.0 | 60.0 | 50.0 | |
| Rhenogran Resorcin (2) | 1.9 | 1.9 | 1.9 | 1.9 | | 1.9 | 1.0 | | | |
| Zinc Oxide | 4.0 | 4.0 | 4.0 | 4.0 | 3.0 | 3.0 | 4.0 | 4.0 | 4.0 | 3.0 |
| Stearic Acid | 2.5 | 2.5 | 2.5 | 2.5 | 1.0 | 1.0 | 2.5 | 2.5 | 2.5 | 1.0 |
| N326 Black | 49.0 | 49.0 | 49.0 | 49.0 | | | 45.0 | 45.0 | 45.0 | |
| N660 Black | | | | | 57.0 | 57.0 | | | | 55.0 |
| Ground Limestone | | | | | 46.0 | 46.0 | | | | |
| Aromatic Oil | 8.0 | 8.0 | 8.0 | 8.0 | 10.0 | 10.0 | 8.0 | 8.0 | 8.0 | |
| Parraffinic Oil | | | | | | | | | | 10.0 |
| Humag (3) | | | | | 0.5 | 0.5 | | | | |
| Sulphur | | | | | 0.5 | 0.5 | | | | 0.5 |
| Insoluble Sulphur OT20 | 3.9 | 3.9 | 3.9 | 3.9 | | | 3.0 | 3.0 | 3.0 | |
| TBB5 | | | | | | | 1.0 | 1.0 | 1.0 | |
| MBS | 1.2 | 1.2 | 1.2 | 1.2 | | | | | | |
| MBTS | | | | | 1.0 | 1.0 | | | | 1.5 |
| TMTD | | | | | 0.2 | 0.2 | | | | |
| HMT | 1.2 | 1.2 | 1.2 | 1.2 | | 1.2 | 0.6 | | | |
| CTPI | 0.5 | 0.5 | 0.5 | 0.5 | | | 0.5 | 0.5 | 0.5 | |
| Peel adhesion (1) (N) | 20 | 17 | 21 | 31 | 5 | 9 | 21 | 25 | 24 | < 5 |
| Air Permeability Coefficient ($10^{-8}\,m^4/GNs$) | 6.0 | 3.0 | 0.6 | < 0.5 | 0.5 | 0.5 | 0.6 | 0.6 | 0.5 | 0.4 |

(1) Adhesion to Dipped Rayon
(2) A dispersion of 80% Resorcinol in 20% polymer binder, available from Rhein Chemie Rheinau GmbH, Mannheim, W.G.
(3) A dispersion of 78% Magnesium Oxide in 22% oil, available from Hubron Sales, Manchester, U.K.
(4) An Epoxidised Natural Rubber believed to comprise 25 mol % Epoxidation, available as Epoxyprene 25, from Kumpulan Guthrie Berhad
(5) An Epoxidised Natural Rubber believed to comprise 50 mol % Epoxidation, available as Epoxyprene 50, from Kumpulan Guthrie Berhad

## Claims

1. A tubeless pneumatic tyre comprising a pair of bead regions (2) and a reinforcing carcass extending from bead region to bead region around the tyre to define the air retaining envelope, characterised in that the reinforcing carcass comprises at least one ply (1) of a reinforcing fabric comprising a matrix of reinforcing filaments or cords embedded in a topping layer of elastomeric material, wherein the elastomeric material has an air permeability factor of less than $4.0 \times 10^{-8} m^4/GNs$ and a peel adhesion value as defined herein to the reinforcing filaments or cords of greater than 15N.

2. A tubeless pneumatic tyre according to Claim 1 characterised in that the elastomeric material has an air permeability factor of less than $2.0 \times 10^{-8} m^4/GNs$.

3. A tubeless pneumatic tyre according to Claim 1 characterised in that the elastomeric material has an air permeability of less than $1.0 \times 10^{-8} m^4/GNs$.

4. A tubeless pneumatic tyre according to Claims 1, 2 or 3 charcterised in that the elastomeric material has a peel adhesion value of greater than 25N.

5. A tubeless pneumatic tyre according to any of Claims 1 to 4 characterised in that the elastomeric material comprises 5-100 parts of an epoxidised natural rubber per 100 parts of polymer.

6. A tubeless pneumatic tyre according to any of Claims 1 to 4 characterised in that the elastomeric material comprises 20-100 parts of halobutyl elastomer per 100 parts of polymer.

7. A tubeless pneumatic tyre according to any of Claims 1 to 4 characterised in that the elastomeric material comprises 20-100 parts of nitrile rubber per 100 parts of polymer.

8. A tubeless pneumatic tyre according to any of Claims 1 to 4 characterised in that the elastomeric material comprises 20-100 parts of butyl rubber per 100 parts of polymer.

9. A tubeless pneumatic tyre according to any of Claims 6, 7 or 8 characterised in that the elastomeric material comprises less than 80 parts of epoxidised natural rubber.

10. A pneumatic tyre according to any of Claims 1 to 9 characterised in that the thickness of topping layer of elastomeric material is different on each side of the reinforcing fabric.

11. A pneumatic tyre according to any of Claims 1 to 10 characterised in that the said elastomeric material is on one side only of the reinforcing fabric.

12. A pneumatic tyre according to Claim 11 characterised in that the said elastomeric material is on the side of the reinforcing fabric which is adjacent to the air envelope in the tyre.

13. A pneumatic tyre according to any of the preceding Claims characterised in that the reinforement filaments or cords comprise a material selected from rayon, polyamide, polyester, aromatic polyamide or steel.

14. A pneumatic tyre according to any of the preceding claims characterised in that the reinforcing filaments or cords are arranged at 80°-90° to circumferential direction in the tyre and the tyre has a tread reinforced by a breaker.

FIG.1

FIG.2